# EUROPÄISCHE PATENTSCHRIFT

(11) **EP 2 201 632 B1**
(45) Veröffentlichungstag und Bekanntmachung des Hinweises auf die Patenterteilung: **11.06.2014**
(21) Anmeldenummer: 08801948.4
(22) Anmeldetag: 09.09.2008
(51) Int. Cl.: H01M 8/02, H01M 8/10

(54) **HOCHTEMPERATUR-POLYMER-ELEKTROLYT-MEMBRAN-BRENNSTOFFZELLE (HT-PEMFC) EINSCHLIESSLICH VORRICHTUNGEN ZU DEREN KÜHLUNG**
HIGH-TEMPERATURE POLYMER ELECTROLYTE MEMBRANE FUEL CELL (HT-PEMFC) INCLUDING APPARATUSES FOR COOLING SAID FUEL CELL
PILE À COMBUSTIBLE À MEMBRANE ÉLECTROLYTIQUE POLYMÈRE À HAUTE TEMPÉRATURE (HT-PEMFC) COMPRENANT DES DISPOSITIFS POUR SON REFROIDISSEMENT

(30) Priorität: 19.09.2007 DE 102007044634
(43) Veröffentlichungstag der Anmeldung: 30.06.2010
(73) Patentinhaber: Zentrum für Sonnenenergie- und Wasserstoff-Forschung Baden-Württemberg Gemeinnützige Stiftung, 70565 Stuttgart (DE)
(72) Erfinder: SCHOLTA, Joachim, 89278 Nersingen (DE); ZHANG, Weibo, 52428 Jülich (DE); JÖRISSEN, Ludwig, 89231 Neu-Ulm (DE); LEHNERT, Werner, 73340 Amstetten (DE)
(74) Vertreter: Merkle, Gebhard
(86) Internationale Anmeldenummer: PCT/EP2008/007376
(87) Internationale Veröffentlichungsnummer: WO 2009/036913

(56) Entgegenhaltungen:
- EP-A- 0 128 023
- WO-A-2006/053727
- WO-A-2006/135108
- WO-A1-98/28809
- DE-A1-102004 056 846
- US-A1- 2005 252 892
- US-B1- 6 492 055

## Beschreibung

### Gebiet der Erfindung

Die Erfindung betrifft eine Hochtemperatur-Polymer-Elektrolyt-Membran-Brennstoffzelle (HT-PEMFC) einschließlich Vorrichtungen zur Kühlung von HT-PEMFC mit Flüssigwasser mittels gesteuertem Gradientenverlauf.

### Hintergrund und Stand der Technik

Hochtemperatur-PEM-Brennstoffzellen (HT-PEMFC) sind für einen Einsatztemperaturbereich von 70 bis etwa 200°C, besonders jedoch für Temperaturen von 120 bis 180°C geeignet. Im Gegensatz zu konventionellen Polymerelektrolyt-Membran-Brennstoffzellen (PEMFC), welche einen Betriebstemperaturbereich von 0 - 90°C aufweisen, kann die Hochtemperatur-PEMFC nicht mit nach dem Stand der Technik üblichen Verfahren mit Wasser gekühlt werden. Dieses liegt darin begründet, dass sich bei solchen Verfahren nur ein geringer Temperaturgradient zwischen Kühlwasser und Elektrodenraum einstellt. Somit bleiben nach dem Stand der Technik zur Erzielung eines für die HT-PEMFC passenden Arbeitsbereiches nach dem Stand der Technik nur folgende Möglichkeiten:
a) Kühlung mit unter Druck stehendem Wasser
b) Kühlung mit anderen Wärmeträgermedien
c) Kühlung mit im Zellinneren verdampfendem Wasser oder mit Wasserdampf
d) Kühlung mit Luft

Die genannten Verfahren werden zum Teil bei verwandten Zellen eingesetzt, z.B. Verfahren a) bei großen Phosphorsäure-Brennstoffzellen (PAFC) der Fa. IFC (PC25). Eine Ausführungsvariante ist in DE-A-2631113 beschrieben. Weiterhin wird Verfahren b) nach heutigem Stand der Technik bei HT-PEMFC eingesetzt. Auch an Zellen nach Verfahren c) wird gearbeitet.

Alle genannten Verfahren weisen im Vergleich zur Kühlung mit Flüssigwasser erhebliche Nachteile auf.

Verfahren a) führt zu teuren Zellkonstruktionen, da der Kühlkreislauf druckfest ausgeführt sein muss; so werden z.B. zu Kühlschlangen geformte Edelstahlrohre in die Zellen integriert.

Verfahren b) weist neben dem Nachteil der erhöhten Kosten für das Kühlmittel eine erhöhte Anforderung an die Dichtigkeit des Systems auf, da kleine Mengen in den Elektrodenbereich eindringendes Kühlmittel die Zelle irreversibel schädigen können, während kleine Mengen Wasser praktisch folgenlos bleiben. Außerdem sind derartige Kühlmittel umweltschädlich.

Verfahren c) weist den erheblichen Nachteil einer sehr schwer beherrschbaren Dynamik auf, da im Kühlmittelbereich befindliches, verdampfendes Wasser sehr schnell zu Temperatureinbrüchen führt, und die Verdampfungsrate je nach aktuellen Zellzustand, besonders der aktuellen Temperaturverteilung, starken Schwankungen unterworfen ist. Setzt man statt dessen Wasser durchgängig in der Dampfphase ein, muss entweder das Auskondensieren im wärmeabführenden Wärmetauscher vermieden oder das Wasser vor dem Zelleintritt wieder verdampft werden. Zusätzlich sind für die Durchströmung der Zelle mit Wasserdampf eine erhöhte Pumpenergie sowie teurere Aggregate erforderlich, da erhöhte Anforderungen an die Temperaturbeständigkeit bestehen.

Gleiches gilt für Variante d) hinsichtlich des für die Kühlluftführung erforderlichen Energieaufwands. Weiterhin ist mit Luftkühlung eine Nutzung der Restwärme auf erhöhtem Temperaturniveau praktisch nicht möglich.

In der DE 10 2005 044 316 A1 wird über eine spezielle Ausführung des Kühlmittelkanals innerhalb des Stacks berichtet. Die dort vorgestellte Anordnung beschreibt einen zu der Außenrändern der Bipolarplatte hin verschmälerten Kanal und einen damit korrespondierenden, zum Kanalrand hin verbreiterten Außensteg. Dies soll eine erhöhte Druckfestigkeit im Bereich des Kühlmittelkanals bewirken und hat weder eine signifikante Auswirkung auf den Temperatur-Verlauf im Bereich der Bipolarplatten, noch auf die Temperaturspreizung zwischen Kühlmittel- und Bipolarplattentemperatur.

In der DE 199 62 679 A1 sowie in DE 199 30 875 A1 wird eine Hochtemperatur-PEMFC beschrieben, welche mit Thermoöl gekühlt wird, um so ein betriebsentsprechendes Temperaturniveau bei gleichzeitig niedriger Temperaturdifferenz zum Temperaturniveau des Kühlmittels zu gewährleisten. Um an Temperaturniveaus unterhalb von 100°C anzukoppeln, wird dort der Einsatz eines Primär- und eines Sekundärkühlkreislaufs vorgeschlagen.

In der DE 202 10 508 U1 wird eine mit verdampfendem Kühlmittel arbeitende Brennstoffzelle nach dem Heat-Pipe-Prinzip beschrieben. Auch diese Anordnung weist keine Vorteile im Hinblick auf einen hohen Temperaturgradienten zwischen Kühlmittel und Stack auf.

In der DE 199 35 719 C2 wird eine Vorrichtung zur Verminderung von Temperaturgradienten zwischen Kühlmittel und Elektrode beschrieben, welche eine extern angeordnete Kühlungseinrichtung umfasst.

Die EP 0 128 023 A1 beschreibt eine Brennstoffzelle, bei der die Zellkonstruktion lediglich einen im Innenbereich integrierten Kühlkreislauf aufweist. Hierbei ist pro Zelleinheit eine Zwischenplatte mit Kühlfunktion vorgesehen, welche von einem gewundenen, in den Aussparungen der Zwischenplatte geführten Schlauch mit Kühlmittel durchströmt wird. Wie aus den Figuren 3a, b und 6a, b ersichtlich, ist die Konstruktion auf einen Wärmeübergang im Innenbereich der Zelle ausgelegt, da nur im Innenbereich ein direkter mechanischer und somit thermischer Kontakt zwischen den Kühlschläuchen 90 und den Kühlplatten 41 besteht. Hierbei sind lediglich die Schläuche 90 bzw. die Verteilereinheiten 90' in den Außenbereich herausgeführt. Gemäß Figur 3a besteht der Kühlschlauch 90 aus einem kontinuierlichen, serpentinenförmig gewundenen Rohr mit einem Einlass und einem Auslass für Kühlmittel, das im Inneren durch die Kühlplatte 41 geführt wird. Gemäß Figur 3b besteht das Kühlrohr 90 aus einer Vielzahl von Kühlrohren, die über Verteilereinheiten 90' verbunden sind. Bei der in dieser Druckschrift vorgesehenen Konstruktion besteht somit im Außenbereich der Zelle an keiner Stelle ein thermischer Kontakt mit der Bipolarplatte, was jedoch Voraussetzung für einen technisch relevanten Wärmeübergang wäre.

Die WO 98/28809 A1 beschreibt eine Brennstoffzellenanordnung. Hierbei ist gemäß Figur 5 eine Kühlmittelströmungsanordnung 666 auf der gleichen Plattenseite wie die Aktivfläche vorgesehen. Figur 6 beinhaltet eine randseitige Kühlung 766a und 766b, die offensichtlich so gestaltet ist, dass ein möglichst geringer Temperaturgradient entsteht. Diese Druckschrift beschreibt somit eine bipolarplattenintegrierte, jedoch auch im Außenbereich der Zelle liegende Kühlung.

### Aufgabe der Erfindung

Der Erfindung liegt daher die Aufgabe zugrunde, eine Hochtemperatur-PEM-Brennstoffzelle einschließlich Vorrichtungen zu deren Kühlung vorzusehen, mit denen es gelingt, einerseits einen ausreichend hohen Temperaturgradienten von beispielsweise mehr als 20°C zwischen Kühlmittel und Aktivbereich der Zelle aufrecht zu erhalten und andererseits einen hinreichend geringen Temperaturgradienten über dem gesamten Aktivbereich der Zelle zu gewährleisten.

### Zusammenfassung der Erfindung

Die vorstehende Aufgabe wird erfindungsgemäß gelöst durch eine Hochtemperatur-PEM-Brennstoffzelle gemäß Anspruch 1. Bevorzugte bzw. besonders zweckmäßige Ausführungsformen des Anmeldungsgegenstandes sind in den Unteransprüchen angegeben.

Gegenstand der Erfindung ist somit eine Hochtemperatur-Polymer-Elektrolyt-Membran-Brennstoffzelle (HT-PEMFC), welche Vorrichtungen zu deren Kühlung mittels eines Kühlmittels umfasst, mit einer nur im Bereich von bis zu 20 K variierenden Temperatur im Elektrodenraum der Zelle sowie einem Temperaturgradienten von 20-80 K zwischen Elektrodenraum und Kühlmitteleintritt, in dem eine Zellkonstruktion vorgesehen ist, welche es erlaubt, die Wärme auf einem Temperaturniveau nahe 100°C abzuführen und gleichzeitig ein Temperaturniveau im Elektrodenraum im Bereich von 120 bis 200°C zu gewährleisten, wobei die Zellkonstruktion im Innenbereich (Aktivbereich) von Bipolarplatten keinen bipolarplattenintegrierten Kühlkreislauf aufweist und die Bipolarplatten auf mindestens einer Seite der Zelle in den Außenbereich (Kühlbereich) der Zelle herausgeführt sind und in dem Außenbereich der Bipolarplatten ein Kühlkreislauf integriert ist, wobei der im Außenbereich der Bipolarplatten integrierte Kühlkreislauf Kühlkanäle aufweist, welche durch im thermischen Kontakt mit den Bipolarplatten stehende Rohre oder Schläuche definiert sind, und wobei die im thermischen Kontakt mit den Bipolarplatten stehenden Rohre oder Schläuche an den Außenrändern der Bipolarplatten anliegen und nicht von diesen umschlossen sind.

Mittels der erfindungsgemäß vorgesehenen Vorrichtungen gelingt die Realisierung einer Kühlung mit Kühlmedium, vorzugsweise Flüssigwasser, aber auch anderen Kühlmedien, mit gegenüber der Betriebstemperatur der Zelle deutlich erniedrigtem Temperaturniveau. In Standard-Anordnungen ist eine solche Kühlung nicht realisierbar, da die üblicherweise verwendeten Bipolarplatten-Anordnungen eine so hohe Wärmeleitfähigkeit aufweisen, dass eine Differenz von mehr als 20°C zwischen Kühlmitteltemperatur und Zelltemperatur praktisch nicht realisierbar ist. Erfindungsgemäß gelingt somit die Lösung der im Stand der Technik bisher nicht lösbaren Aufgabe, einerseits diesen Temperaturgradienten von der Zelle zum Kühlmittel aufzubauen und andererseits gleichzeitig einen hinreichend geringen Temperaturgradienten über den gesamten Aktivbereich der Zelle bereitzustellen.

### Detaillierte Beschreibung der Erfindung

Gemäß der Erfindung gelingt der Betrieb einer Hochtemperatur-Brennstoffzelle mit einer geeigneten, kaum variierenden Temperatur im Elektrodenraum in Verbindung mit einem hohen Temperaturgradienten zum Kühlmitteleintritt, in dem eine Zellkonstruktion vorgesehen wird, welche es erlaubt, die Wärme auf einem Temperaturniveau nahe 100°C abzuführen und gleichzeitig ein Temperaturniveau im Elektrodenraum zu gewährleisten, welches im Bereich von vorzugsweise 120 bis 180°C liegt.

Für diese erfindungsgemäße Lösung bestehen mehrere Ausführungsformen, die je nach Materialverfügbarkeit und weiteren konstruktiven Anforderungen ausgewählt werden können. Ein allen erfindungsgemäßen Ausführungsformen gemeinsamer Lösungsansatz ist die Schaffung von Zonen verminderter Wärmeleitfähigkeit zwischen Kühlmittel und Zelle einerseits, sowie der Gewährleistung einer möglichst hohen Wärmeleitfähigkeit im Aktivbereich andererseits. Mit diesem Prinzip wird die Einhaltung einer geringen Temperaturspanne zwischen verschiedenen Zonen im Aktivbereich der Zelle gewährleistet, obwohl das verwendete Kühlmittel um bis zu 100°C kälter sein kann, wie die geforderte Zelltemperatur.

Erfindungsgemäß wird folgende Ausführungsform vorgesehen:
Aufbau einer konventionellen Zelle ohne bipolarplattenintegriertem Kühlkreislauf, dafür mit Herausführung der Bipolarplatten auf mindestens einer Seite der Zelle in den Außenbereich der Zelle und Kühlung dort durch Integrierung eines Kühlkreislaufs in dem Außenbereich der Bipolarplatten. Durch die erfindungsgemäße Trennung von Innenbereich (Aktivbereich) und Außenbereich (Kühlbereich) kann der Wärmewiderstand zwischen Kühlmittel und Aktivbereich soweit erhöht werden, dass sich bei üblichen Betriebspunkten ein hinreichend großer Temperaturgradient zwischen Kühl- und Aktivbereich einstellt. Die Kühlkanäle sind hierbei durch mit den Bipolarplatten im thermischen Kontakt stehende Rohre oder Schläuche definiert, wobei diese Rohre oder Schläuche an den Außenrändern der Bipolarplatten anliegen und nicht von diesen umschlossen sind.

Gemäß einer bevorzugten Ausführungsform werden die zur Kühlmitteldurchführung verwendeten Rohre gleichzeitig für die Verspannung der Zelle eingesetzt.

Die oben beschriebene Ausführungsform gemäß der Erfindung bewirkt gegenüber dem z.B. durch DE 199 62 679 A1 wiedergegebenen Stand der Technik eine verbesserte Temperaturverteilung bei gleichzeitig hoher Temperaturdifferenz zwischen Kühlmittel und Aktivbereich.

Bei der erfindungsgemäßen Ausführungsform ist es bevorzugt, dass die Bipolarplatten auf zwei sich gegenüberliegenden Seiten der Zelle in den Außenbereich der Zelle herausgeführt sind.

Eine sinnvolle Auslegung der erfindungsgemäß vorgesehenen Kühlvorrichtungen lässt sich über die Wärmeleitungsgleichung erstellen. Unterstellt man einen vollständigen Wärmeübergang im Kontaktbereich zum Kühlkanal, ist die Temperatur der Kühlkanalwand identisch mit der Kühlmitteltemperatur. Damit ist der Temperaturgradient über den Randbereich des Bipolarplattenmaterials aufzubringen. Um den Einsatz von Bipolarplatten mit isotroper Wärmeleitfähigkeit zu ermöglichen, sollte die zur Wärmeleitung zur Verfügung stehende Querschnittsfläche im Randbereich möglichst klein im Verhältnis zur Querschnittsfläche der Umrandung des Aktivbereichs sein. Daher ist eine dreieckförmige Ausgestaltung der Bipolarplatten im Außenbereich bevorzugt. Erfindungsgemäß ist jedoch jede Ausformung des Außenbereichs möglich, welche durch eine gegenüber der entsprechenden Seite der Umrandungsfläche des Aktivbereichs zum Kühlmittelkanal hin verringernde, der Wärmeübertragung zur Verfügung stehende Querschnittsfläche gekennzeichnet ist. Besonders bevorzugt ist die dreieckförmige Anordnung sowie die dreieckförmige Anordnung mit zwei Kühlkanälen, da diese Ausführungsformen sowohl eine starke Verringerung der zur Wärmeübertragung stehenden Querschnittsfläche zum Kühlkanal bzw. zu den Kühlkanälen hin als auch eine weitgehend gleichmäßige Temperaturverteilung entlang der betreffenden Aktivflächenumrandung aufweisen.

Eine sinnvolle Dimensionierung lässt sich unter Zugrundelegung des erfindungsgemäßen Prinzips der sich zum Kühlmittelkanalbreich hin verringernden, für die Wärmeübertragung zur Verfügung stehenden Querschnittsflächen durch Anwendung der Wärmeleitungsgleichungen nach dem Stand der Technik auslegen.

Die im Aktivbereich produzierte Wärmeleistung liegt im Bereich von 0,01 bis 2 W/cm², besonders im Bereich von 0,1 bis 0,5 W/cm². Unter Zugrundelegung einer aktiven Fläche von 100 cm² ergibt sich so eine abzuführende Wärmeleistung von 10 bis 50 W pro Zelle.

Bei einer Zellkühlung von zwei Seiten ergibt sich bei einer Wärmeleistung von 25 W/Zelle pro Seite eine abzuführende Wärmeleistung von 12,5 W.

Mit einer Wärmeleitfähigkeit des Bipolarplattenmaterials von z.B. 50 W/m/K folgt unter Annahme einer Bipolarplattendicke von 2 mm, einem gewünschten Temperaturgradienten von 60 K sowie einer gegenüber der Umrandungsquerschnittsfläche halbierten Wärmeübertragungsfläche ein Abstand des Kühlmittelkanals von der Umrandungsquerschnittsfläche von 2,4 cm. In der Praxis sind noch Effekte aus einer über die Weglänge veränderlichen Querschnittsfläche sowie die nicht ideale Ankopplung der Kühkanalrandfläche an das Kühlmedium zu berücksichtigen.

Im Normalfall stellt bereits die aus Graphit-Komposit bestehende Bipolarplatte ein Material hinreichend geringer Leitfähigkeit dar, wie die vorliegenden Modellrechnungen zeigen.

Als eine Ausführungsvariante (optional, da nur eine Graphit-Kompositplatte ebenso möglich ist) kann der Einsatz einer Graphit-Kompositplatte (Wärmeleitfähigkeit im Bereich von 20-80 W/m/K) mit Herausführung in den Kühlbereich und der Einsatz einer zweiten Graphit-Bipolarplatte nur im Aktivbereich mit einer höheren Wärmeleitfähigkeit von ca. 200 W/m/K in x-y-Richtung genannt werden.

Prinzipiell sind auch andere Kühlmittel als Wasser geeignet, jedoch ist es ein besonderer Vorteil der Erfindung, gerade den Einsatz von nicht unter Überdruck stehendem Wasser, und damit eines Kühlmediums mit einer Temperatur von maximal 100°C in einer Hochtemperatur-PEMFC zu ermöglichen.

### Vergleichsbeispiel

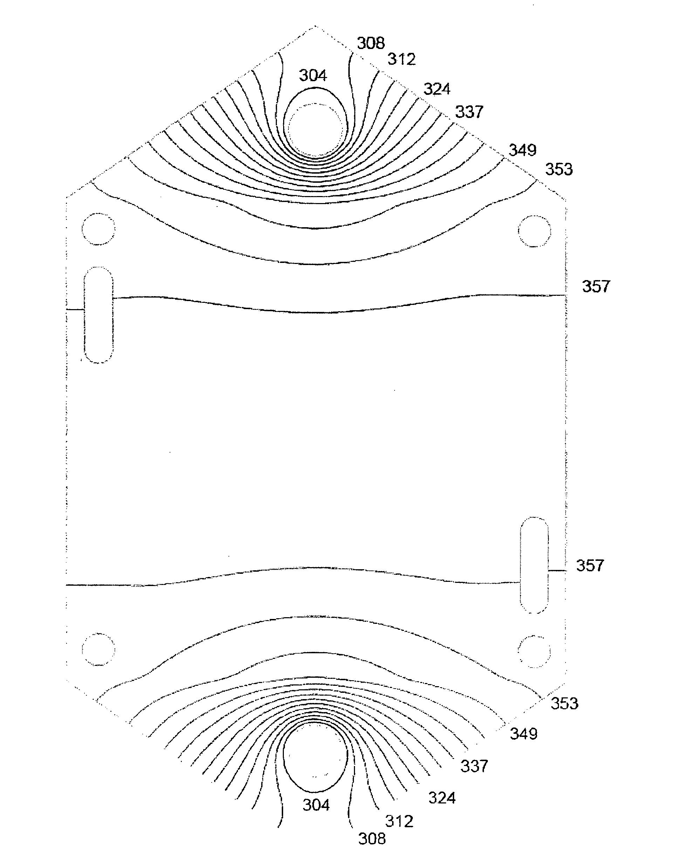

**Figur 1** zeigt den Ausschnitt einer Bipolarplattenhälfte einer HT-PEMFC mit Kühlanbindung und modelliertem Temperaturverlauf.

Ein Vergleichsbeispiel wird im Folgenden erläutert: Eine Hochtemperatur-Brennstoffzelle wird nach dem bekannten Stand der Technik, beispielsweise gemäß DE 199 62 679 A1, aufgebaut, wobei jedoch die ursprüngliche Kühlfunktion in der als Kathoden- und Kühlplatte verwendeten Bipolarplatte entfällt. Stattdessen wird diese Bipolarplatte nach den nicht für die Medienzuführung verwendeten Seiten hin verbreitert, so dass diese Bipolarplatte nach beiden gegenüberliegenden Seiten hin einige Zentimeter über den Zellstack hinausragt. Die so herausgebildeten Enden der Bipolarplatte können nach beiden Seiten hin abgeschrägt sein und sind mit zwei an geeigneter Stelle angebrachten Löchern zur Durchführung eines Kühlmittelschlauchs oder -rohrs versehen. Durch diese Schläuche oder Rohre wird Kühlmittel in Form von Flüssigwasser im Temperaturbereich zwischen 80 und 100°C durchgeführt und so die in der Zelle auf einem Temperaturniveau zwischen 120 und 180°C produzierte Wärme abgeführt. Die Konstruktion ist in der in Figur 1 wiedergegebenen Skizze gezeigt, welche modellierte ISO-Linien der Temperatur, angegeben in Kelvin (K), enthält. Die Kühlmitteltemperatur wurde hierbei mit 300 K angenommen.

Die konkret gewählte Dimensionierung ist abhängig von den Eigenschaften der gewählten Bipolarplattenkomponenten sowie von den geforderten Betriebsstromdichtebereichen und -temperaturen. Erfindungsgemäß wirksame Geometrien können sowohl über Modellrechnungen als auch über die Ermittlung von Temperaturverteilungen aufgebauter Brennstoffzellen unter Variation der Plattendicken und Randbereichsauslegungen ermittelt werden.

## Patentansprüche

1. Hochtemperatur-Polymer-Elektrolyt-Membran-Brennstoffzelle
(HT-PEMFC), welche Vorrichtungen zu deren Kühlung mittels eines Kühlmittels umfasst, mit einer nur im Bereich von bis zu 20 K variierenden Temperatur im Elektrodenraum der Zelle sowie einem Temperaturgradienten von 20-80 K zwischen Elektrodenraum und Kühlmitteleintritt, in dem eine Zellkonstruktion vorgesehen ist, welche es erlaubt, die Wärme auf einem Temperaturniveau nahe 100°C abzuführen und gleichzeitig ein Temperaturniveau im Elektrodenraum im Bereich von 120 bis 200°C zu gewährleisten, wobei die Zellkonstruktion im Innenbereich (Aktivbereich) von Bipolarplatten keinen bipolarplattenintegrierten Kühlkreislauf aufweist und die Bipolarplatten auf mindestens einer Seite der Zelle in den Außenbereich (Kühlbereich) der Zelle herausgeführt sind und in dem Außenbereich der Bipolarplatten ein Kühlkreislauf integriert ist, wobei der im Außenbereich der Bipolarplatten integrierte Kühlkreislauf Kühlkanäle aufweist, welche durch im thermischen Kontakt mit den Bipolarplatten stehende Rohre oder Schläuche definiert sind, und wobei die im thermischen Kontakt mit den Bipolarplatten stehenden Rohre oder Schläuche an den Außenrändern der Bipolarplatten anliegen und nicht von diesen umschlossen sind.

2. HT-PEMFC nach Anspruch 1, **dadurch gekennzeichnet, dass** die Bipolarplatten auf zwei sich gegenüberliegenden Seiten der Zelle in den Außenbereich der Zelle herausgeführt sind.

3. HT-PEMFC nach mindestens einem der vorangehenden Ansprüche, **dadurch gekennzeichnet, dass** als Kühlmedium für die Kühlkreisläufe Flüssigwasser dient.

## Claims

1. A high-temperature polymer electrolyte membrane fuel cell (HT-PEMFC) comprising devices for the cooling thereof by means of a coolant, having a temperature in the electrode chamber of the cell that only varies in the region of up to 20 K and also a temperature gradient of 20-80 K between the electrode chamber and the coolant inlet, in which a cell construction is provided which allows heat at a temperature level close to 100 °C to be removed and at the same time a temperature level in the electrode chamber in the region of 120 to 200 °C to be guaranteed, wherein the cell construction in the inner area (active area) of bipolar plates exhibits no bipolar plate-integrated cooling circuit and the bipolar plates are conducted out on at least one side of the cell into the outer region (cooling area) of the cell and a cooling circuit is integrated in the outer region of the bipolar plates, wherein the cooling circuit integrated in the outer region of the bipolar plates has cooling channels which are defined by tubes or hoses in thermal contact with the bipolar plates and wherein the tubes or hoses in contact with the bipolar plates are adjacent to the outer edges of the bipolar plates and are not surrounded by them.

2. The HT-PEMFC according to claim 1, **characterized in that** the bipolar plates are conducted out on two opposite sides of the cell into the outer region of the cell.

3. The HT-PEMFC according to at least one of the preceding claims, **characterized in that** liquid water is used as the cooling medium for the cooling circuits.

## Revendications

1. Pile à combustible à membrane électrolytique polymère à haute température (HT-PEMFC), laquelle comprend des dispositifs pour son refroidissement à l'aide d'un agent réfrigérant, avec une température variant uniquement dans la plage allant jusqu'à 20 K dans la zone d'électrode de la pile ainsi qu'un gradient de température de 20-80 K entre la zone d'électrode et l'entrée d'agent réfrigérant, dans laquelle une construction de pile est prévue, laquelle permet d'évacuer de la chaleur jusqu'à un niveau de température proche de 100°C et de garantir en même temps un niveau de température, dans la zone d'électrode, dans la plage allant de 120 à 200°C, moyennant quoi la construction de pile ne présente pas de circuit de refroidissement intégré dans des plaques bipolaires dans la zone intérieure (zone active) de plaques bipolaires et moyennant quoi on fait sortir les plaques bipolaires, sur au moins un côté de la pile, dans la zone extérieure (zone de refroidissement) de la pile, et un circuit de refroidissement étant intégré dans la zone extérieure des plaques bipolaires, le circuit de refroidissement intégré dans la zone extérieure des plaques bipolaires présentant des canaux de refroidissement, lesquels sont définis par des tubulaires ou tuyaux en contact thermique avec les plaques bipolaires, et moyennant quoi les tubulaires ou tuyaux en contact thermique avec les plaques bipolaires reposent contre les bords extérieurs des plaques bipolaires et ne sont pas entourés par ceux-ci.

2. Pile à combustible à membrane électrolytique polymère à haute température selon la revendication 1, **caractérisée en ce que** l'on fait sortir les plaques bipolaires dans la zone extérieure de la pile, sur deux côtés situés en vis-à-vis de la pile.

3. Pile à combustible à membrane électrolytique polymère à haute température selon l'une au moins des revendications précédentes, **caractérisée en ce que** de l'eau liquide sert d'agent réfrigérant pour les circuits de refroidissement.
